# EUROPEAN PATENT APPLICATION

(11) **EP 1 701 429 A1**
(43) Date of publication of application: **13.09.2006**
(21) Application number: 04807524.6
(22) Date of filing: 22.12.2004
(51) Int. Cl.: H02K 3/04

(54) **SLOTLESS MOTOR AND METHOD OF MANUFACTURING THE SAME**

(30) Priority: 26.12.2003 JP 2003434365
(71) Applicant: Mabuchi Motor Co., Ltd., Matsudo-shi, Chiba 270-2280 (JP)
(72) Inventor: IIZUKA, Satoshi, Matsudo-shi, Chiba 2702280 (JP)
(74) Representative: Reichel, Wolfgang
(86) International application number: PCT/JP2004/019167
(87) International publication number: WO 2005/064768

(57) **Abstract**

The present invention provides a winding structure for implementing a high-performance, small-sized, low-cost slotless motor. A rotor includes a core fixed on a shaft, and windings. The core has a cylindrical side surface facing the field magnet, and opposite end surfaces located at opposite sides with respect to a direction of a shaft axis. The windings in a plurality of segments are wound on the side surface and on the end surfaces of the core. The winding of a plurality of turns of each of the segments is wound orderly in such a manner as to be symmetrical with respect to the shaft and such that the turns do not intersect with each other. The winding of each of the segments is such that, at least on the side surface of the core, symmetrically arranged opposite portions of the winding are orderly arranged in parallel with the shaft axis with no clearance formed therebetween and such that, on each of the opposite end surfaces of the core, the symmetrically arranged opposite portions of the winding are orderly arranged in such a manner as to deflect radially outward in a central region of the end surface so as to avoid the shaft.

## Description

### TECHNICAL FIELD

The present invention relates to a slotless motor in which windings in a plurality of segments are wound on the outer surface of a core fixed on a shaft of a rotor, as well as to a method of manufacturing the same.

### BACKGROUND ART

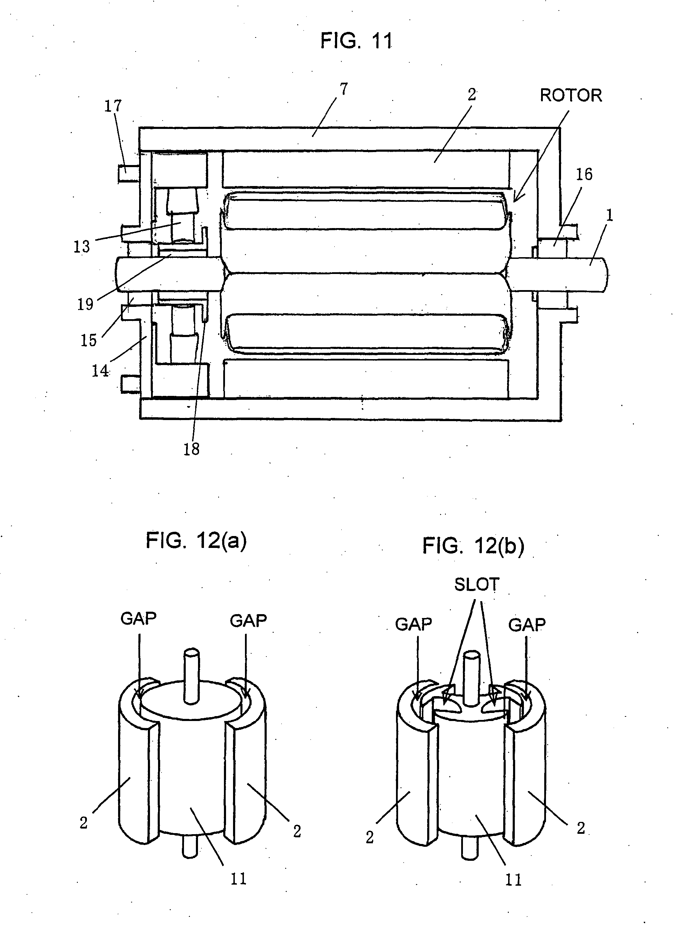

FIGS. 12(a) and 12(b) are conceptual views showing a slotless motor and a cored motor (also called a slot motor), respectively, and are used to describe merits and demerits of an ordinary slotless motor in contrast to a cored motor.

Basically, the cored motor shown in FIG. 12(b) is configured such that windings are wound in slots of a core 11, whereas the slotless motor shown in FIG. 12(a) is configured such that windings must be disposed in gaps between the core 11 and field magnets 2. Accordingly, the gaps of the slotless motor must be large as compared with those of the cored motor; as a result, magnetic reluctance of gap portions is increased. In the slotless motor, the greater the number of turns of winding, the greater the volume of winding to be disposed in the gap; i.e., a greater gap must be provided. Thus, as compared with the cored motor, the slotless motor has difficulty in efficiently obtaining reverse induction voltage. Meanwhile, as compared with the cored motor, the slotless motor exhibits excellent characteristics, such as low inductance and low cogging torque.

Conventionally, for a given motor size, in order to obtain a high reverse induction voltage, a high-energy-product magnet must be used. However, according to the conventional art, use of a high-grade magnet leads to a great increase in motor cost. In order to suppress such a cost increase, the performance of a rotor must be improved. To meet this end, the sectional area of a coil must be increased for increasing effective magnetic flux (increasing magnetic flux linked with a coil), and the number of turns must be increased, or the gap between a core and a magnet must be reduced (magnetic reluctance must be reduced).

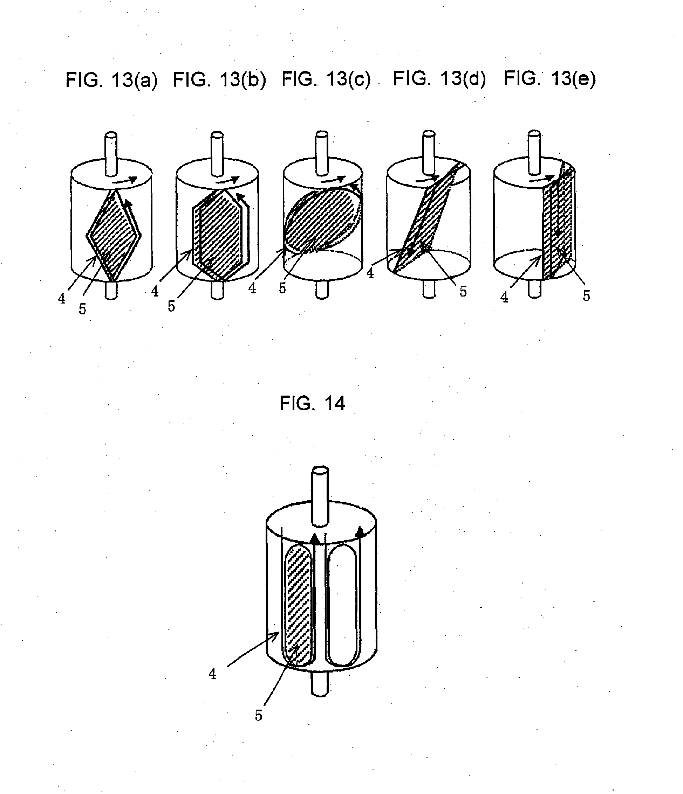

Winding structures of conventional slotless motors are divided roughly into generally practiced distributed winding (dispersed winding) as shown in FIGS. 13(a) to 13(e) and concentrated winding (partial winding) as shown in FIG. 14. These winding structures have involved a drawback that the magnitude of magnetic flux linked with a coil formed by a winding wire 4 is small, resulting in a failure to efficiently utilize magnetic flux of a magnet. In the drawings, reference numeral 5 denotes a plane formed by the coil.

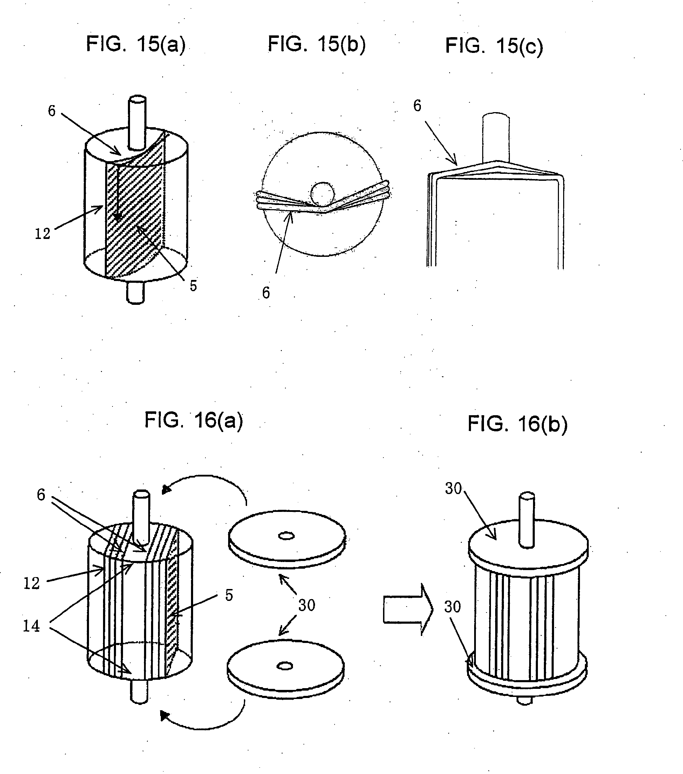

FIG. 15 is a series of views describing a conventional winding structure, wherein (a) is a perspective view of a rotor, (b) is an end view, and (c) is a side view. The winding structure of FIG. 15 is devised such that a sectional area 5 is increased by means of extending a winding wire 12 vertically (in parallel with a shaft) on a side surface of a core, so as to capture magnetic flux of a field magnet to the greatest possible extent. However, in this winding structure, turns of a winding wire 6 on a core end surface (may be called a coil end portion); particularly, those near the shaft, overlie one another, and thus tend to get out of shape, causing difficulty in orderly winding. Also, as a winding process proceeds, windings overlie one another and pile up on the core end surfaces, thereby bulging in the axial direction. This leads to an increase in the overall length of the rotor. The dimensional increase of the winding piles, which do not contribute to improvement of performance, on the core end surfaces prevents compatibility between high performance and a reduction in size.

In order to avoid such a pileup of windings on the core end surfaces, a winding method shown in FIG. 16 is known (refer to Patent Document 1). FIGS. 16(a) and 16(b) show states before and after attachment of end plates 30. According to this winding method, a winding coil is wound on the core such that the winding wire 12 extends vertically on the side surface of the core, so as to increase the sectional area 5 of the coil. Upon each completion of winding of one layer, the end plates 30 whose diameter is increased by twice the diameter of a wire are attached to the corresponding rotor end portions. This facilitates orderly winding and improves productivity.

However, since this winding method cannot wind a winding in a central shaft region, turns of the winding wire 6 wound on the core end surface are divided into two portions with a clearance 14 formed therebetween. Thus, difficulty is encountered in efficiently increasing the number of turns of winding. Additionally, since the end plates 30 are attached every layer of winding, the height of a rotor end portion in the direction of the shaft increases, and the radial dimension of the rotor increases needlessly, resulting in an increase in motor size.
Patent Document 1: Japanese Utility Model Application Laid-Open (kokai) No. 49-87002

### DISCLOSURE OF THE INVENTION

### PROBLEMS TO SOLVED BY THE INVENTION

As described above with reference to FIG. 15, in the winding structure in which a large sectional area is imparted to a coil, simply increasing the number of turns involves the following problem: as winding proceeds, turns of winding on a core end portion overlie one another and pile up. Thus, turns of winding wound on the core end portions bulge out, resulting in an increase in the size of a motor, and a drop in productivity caused by bulging turns of winding getting out of shape.

As shown in FIG. 16, in the winding structure in which orderly winding and use of end plates are combined, winding is divided into two portions with a clearance which is formed therebetween and in which no winding is present; and the rotor increases not only in length along the direction of the shaft axis, but also in radial dimension with a resultant increase in the gap between the same and a field magnet.

An object of the present invention is to solve the above problems, and to provide a winding structure for implementing a high-performance, small-sized, low-cost slotless motor.

### MEANS FOR SOLVING THE PROBLEMS

A slotless motor of the present invention comprises a field magnet and a rotor; the rotor comprises a core fixed on a shaft, and windings; the core has a cylindrical side surface facing the field magnet, and opposite end surfaces located at opposite sides with respect to a direction of a shaft axis; and the windings in a plurality of segments are wound on the side surface and on the end surfaces of the core. The winding of a plurality of turns of each of the segments is wound orderly in such a manner as to be symmetrical with respect to the shaft and such that the turns do not intersect with each other. The winding of each of the segments is such that, at least on the side surface of the core, symmetrically arranged opposite portions of the winding are orderly arranged in parallel with the shaft axis with no clearance formed therebetween and such that, on each of the opposite end surfaces of the core, the symmetrically arranged opposite portions of the winding are orderly arranged in such a manner as to deflect radially outward in a central region of the end surface so as to avoid the shaft.

According to a method of manufacturing a slotless motor of the present invention, in orderly winding the winding of a plurality of turns of each of the segments in such a manner as to be symmetrical with respect to the shaft and such that the turns do not intersect with each other, the winding of each of the segments is formed such that, at least on the side surface of the core, by use of a positioning jig for appropriately positioning winding on the core, symmetrically arranged opposite portions of the winding are orderly arranged in parallel with the shaft axis with no clearance formed therebetween. Also, the winding of each of the segments is formed such that, on each of the opposite end surfaces of the core, by use of a forming jig for forming winding into a predetermined shape and positioning the formed winding, the symmetrically arranged opposite portions of the winding are orderly arranged in such a manner as to deflect radially outward in a central region of the end surface so as to avoid the shaft. The positioning jig and the forming jig are controlled so as to move and stop synchronously with a winding machine.

### EFFECT OF THE INVENTION

According to the present invention, while a large sectional area is imparted to a coil so as to effectively utilize magnetic flux of the field magnet, a portion of winding corresponding to a coil end portion is deflected radially outward in a central region of the core end surface, and winding is orderly and closely wound on the core side surface. By this procedure, the number of turns of winding can be increased without need to increase the rotor size.

Without disposition of an end plate on a coil end portion, the coil end portion is orderly wound while being deflected radially outward in a central region of the core end surface. Thus, the height of the coil end portion can be lowered, whereby the final motor size can be small.

Also, a large sectional area is imparted to a coil, and reverse induction voltage is increased by means of increasing the number of turns without involvement of an increase in rotor size (while the gap between the core and the magnet is held small). Thus, high performance can be obtained without need to use an expensive (high-grade) magnet. Therefore, a small-sized low-cost slotless motor can be manufactured.

Additionally, since winding is not wound at random, but can be wound orderly, bonding strength can be effectively enhanced when a fusible-adhesive-coated wire is used.

### BRIEF DESCRIPTION OF THE DRAWINGS

[FIG. 1] Perspective view of a rotor and field magnets for describing winding of the present invention.
[FIG. 2] End views of the rotor for describing winding of the present invention.
[FIG. 3] Views showing examples of winding arrangements in which a portion of winding is deflected radially outward in a central region of a core end surface.
[FIG. 4] Views for describing an example of a winding method.
[FIG. 5] Views for describing winding of a second segment.
[FIG. 6] views for describing winding of a third segment.
[FIG. 7] Views for describing another example of a winding structure, wherein (a) is a view showing an example winding structure which is formed by the same method as that which has been described with reference to FIGS. 4, 5, and 6, and (b) is a view showing another example.
[FIG. 8] Views for describing a method of forming the winding structure of FIG. 7(b).
[FIG. 9] Views showing a rotor on which windings are formed, wherein (a) is a sectional view, and (b) is an end view.
[FIG. 10] Views of the completed rotor as viewed in different directions, wherein (a) is a front view of the rotor with a shaft oriented horizontally, and (b) is an end view of the rotor.
[FIG. 11] Sectional view showing an example of a small-sized motor which is completed by attaching a commutator to the rotor of FIG. 10 and fitting the resulting assembly into a motor casing.
[FIG. 12] Conceptual views, wherein (a) shows a slotless motor, and (b) shows a cored motor.
[FIG. 13] Views showing winding structures of conventional slotless motors having windings which are generally called distributed winding (dispersed winding).
[FIG. 14] View showing a winding structure of a conventional slotless motor having windings which are called concentrated winding (partial winding).
[FIG. 15] Views for describing a conventional winding structure.
[FIG. 16] Views for describing a conventionally known winding method.
[FIG. 17] Views for describing improvement of space factor on a core side surface by means of forming end portions of winding wound on a core end surface, in such a manner as to extend straight.

### DESCRIPTION OF REFERENCE NUMERALS

- 1:: shaft
- 2:: field magnet
- 4:: winding wire
- 5:: plane formed by coil
- 6:: winding wire wound on core end surface
- 7:: casing
- 9:: lead wire
- 11:: core
- 12:: winding wire on core side surface
- 13:: brush
- 14:: casing cover
- 15,: 16: bearing
- 17:: input terminal
- 18:: commutator one-leg portion
- 19:: commutator
- 20-23:: stopper
- 24-27:: former
- 30:: end plate

### BEST MODE FOR CARRYING OUT THE INVENTION

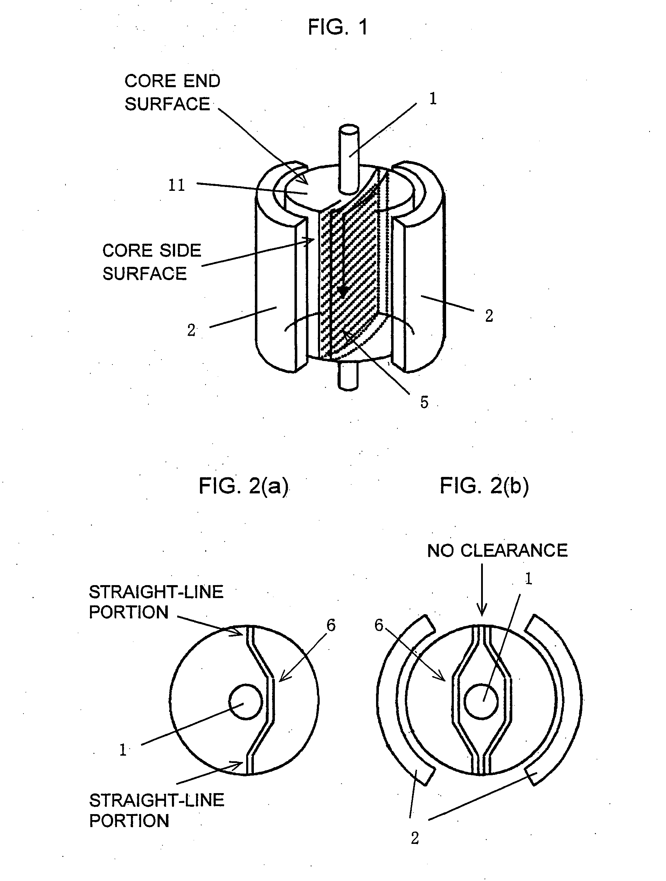

The present invention will next be described with reference to illustrations. FIGS. 1 and 2 are views for describing winding of the present invention. FIG. 1 is a perspective view, and FIG. 2 is an end view. Since the illustrated slotless motor can be configured similar to a conventionally known motor except for the structure of a rotor, detailed description of other than the structure of the rotor is omitted. As illustrated, a stator has field magnets 2. In the present illustration, two field magnets 2 are provided to form two magnetic poles. In general, a plurality of field magnets 2 are provided to form a plurality of magnetic poles. The rotor includes a core 11 and an unillustrated commutator. The core 11 is formed by laminating, in an ordinary manner, silicon steel sheets on a rotatably supported shaft 1. In the present specification, the term "core end surface" means each of opposite end surfaces, with respect to the direction of a shaft axis, of the illustrated core having a cylindrical shape. The term "core side surface" means the cylindrical surface of the core which faces the magnets 2.

Rotor windings consist of windings in equal number to a plurality of segments corresponding to magnetic poles of the rotor. Each of the segments is a winding of a plurality of turns. In the present specification, the term "coil" is used mainly to represent "one turn of winding," but is basically used in the same meaning as winding.

As shown in FIG. 1, on the core side surface, winding is arranged in parallel with the shaft axis. As shown in FIG. 2(a), on the core end surface, winding is arranged in such a manner as to deflect radially outward in a central region of the core end surface so as to avoid the shaft 1. A next turn of a winding wire 6 on the core end surface is arranged in such a manner as to not intersect a first turn with no clearance therebetween. In this manner, a plurality of turns are orderly arranged with no clearance therebetween. FIG. 2(a) illustrates two turns of the winding wire 6. In actuality, a large number of turns of winding are orderly arranged. In the present specification, the term "orderly winding" means that winding is wound such that its adjacent turns do not intersect each other.

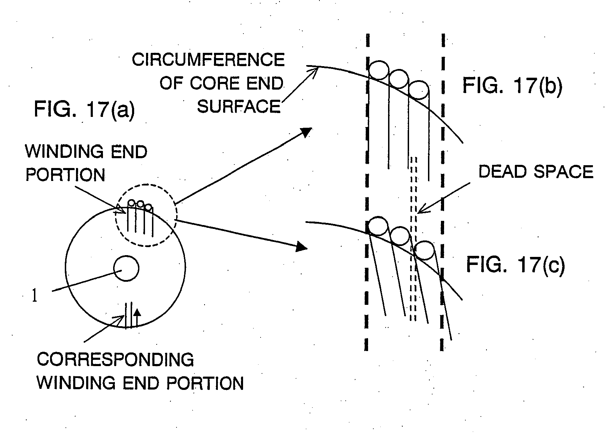

Next, as shown in FIG. 2(b), winding is also wound on a radially opposite side of the core end surface with respect to the shaft 1, thereby forming a single winding segment in which winding is wound symmetrically and continuously (in series). In this case, opposite portions of winding arranged symmetrically with respect to the shaft are arranged such that, at least on the core side surface, no clearance is formed therebetween. Preferably, in a circumferential region of the core end surface; i.e., in a region of the core end surface in the vicinity of the boundary between a portion of winding on the core end surface and a portion of winding on the core side surface, the symmetrically arranged opposite portions of winding are arranged in such a manner as to extend straight with no clearance therebetween. With regard to the winding wire 6 which is wound on the core end surface in such a manner as to deflect radially outward in a central region of the core end surface, end portions of the winding wire 6 are formed in such a manner as to extend straight, whereby space factor on the core side surface can be improved. This will be further described with reference to FIG. 17.
The circle of a dotted line shown in FIG. 17(a) shows a winding end portion in the vicinity of the circumference of the core end surface. FIGS. 17(b) and 17(c) are views showing, on an enlarged scale, the winding end portion. In FIG. 17(b), the winding end portion is arranged in such a manner as to extend straight toward a corresponding winding end portion. In FIG. 17(c), the winding end portion is arranged in such a manner as to deflect away from the shaft with respect to a direction directed toward the corresponding winding end portion. In the arrangement shown in FIG. 17(c), a dead space is present between turns of winding. In the arrangement shown in FIG. 17(b), the dead space is absent.

According to the present invention, on the core end surface of the rotor, the winding wire 6 is bent in such a manner as to deflect radially outward in a central region of the core end surface so as to avoid or detour the shaft 1. Thus, at least on the core side surface, winding of one segment is orderly wound such that no clearance is present between turns of winding. By this procedure, while a large sectional area 5 is imparted to a coil so as to greatly utilize effective magnetic flux of the field magnets 2, the number of turns can be increased so as to increase reverse induction voltage, without involvement of an increase in rotor size. Thus, space occupancy by coil end portions can be reduced, and a large number of turns of winding can be implemented.

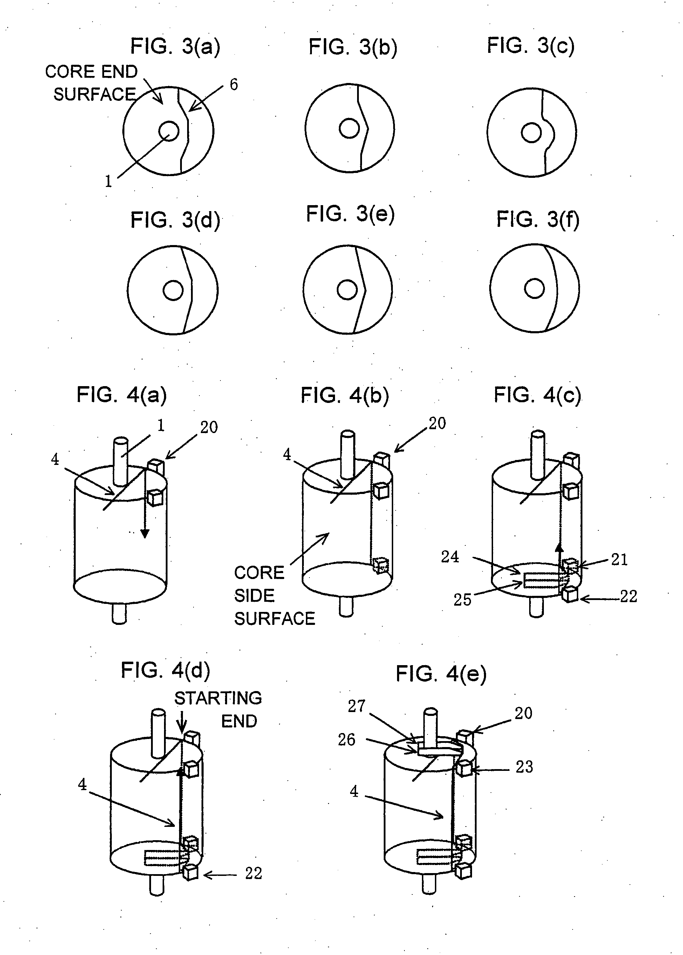

The winding wire 6 is arranged in such a manner as to deflect radially outward in a central region of the core end surface so as to avoid the shaft 1. Specifically, while the winding wire 6 has straight-line portions in a radially outward region of the core end surface, the remaining central portion of the winding wire 6 may assume a trapezoidal shape as shown in FIG. 3(a), a triangular shape as shown in FIG. 3(b), or a circular shape as shown in FIG. 3(c). Furthermore, without provision of the straight-line portions in a radially outward region of the core end surface, the winding wire 6 may assume a trapezoidal shape as shown in FIG. 3(d), a triangular shape as shown in FIG. 3(e), or an arcuate shape as shown in FIG. 3(f).

Next, a method of winding the above-mentioned winding structure will be described by way of example. FIG. 4 is a series of views for describing an example method of winding.
FIGS. 4(a) to 4(e) show steps of winding. In the drawings, stoppers 20, 21, 22, and 23 are jigs for positioning winding in place on the core. Formers 24, 25, 26, and 27 are forming jigs for positioning and arranging winding in such a manner as to deflect radially outward in a central region of the core end surface. These stoppers and formers must be moved to respectively appropriate positions corresponding to individual turns of winding and thus are provided symmetrically on each of the opposite end surfaces of the core. The stoppers and formers are controlled so as to move and stop in an interlocking relation with a winding machine.

First, as shown in FIG. 4(a), a winding wire 4 is tied (not shown) to a commutator one-leg portion (commutator piece connection portion to which an end portion of winding is connected) or to a hook of winding installation. Next, the winding wire 4 is led to and caught on the first stopper 20. As illustrated, the stopper 20 performs positioning at an upper edge (in the drawing) of the core side surface.

Next, as shown in FIG. 4(b), while being caught on the stopper 20, the winding wire 4 is led on the core side surface vertically downward (in the drawing) in parallel with the shaft 1.

As shown in FIG. 4(c), the winding wire is caught on the stopper 21. While being caught on the stopper 21, the winding wire is let toward the stopper 22. At this time, a portion of the winding wire on the core end surface (coil end portion) is caught on the former 24 which can be pitch-fed so as to deflect the coil end portion radially outward in a central region of the core end surface. Then, the coil end portion is caught on the former 25. While being caught on the formers 24 and 25, the coil end portion is caught on the stopper 22. By this procedure, the coil end portion is bent in such a manner as to deflect radially outward in a central region of the core end surface.

Next, as shown in FIG. 4(d), while being caught on the stopper 22, the winding wire 4 is led on the core side surface vertically upward in parallel with the shaft 1.

Next, as shown in FIG. 4(e), the winding wire 4 is caught on the stopper 23. While being caught on the stopper 23, the winding wire 4 is led in such a manner as to be orderly wound at the inside (on a side near the shaft) of a winding start end which has been caught on the stopper 20 in the step of FIG. 4(a). At this time, a coil end portion of the winding wire is caught on the former 26 which can be pitch-fed so as to deflect the coil end portion radially outward in a central region of the core end surface. Then, the coil end portion is caught on the former 27. While being caught on the formers 26 and 27, the coil end portion is caught on the winding start end which serves as a stopper. Similarly, while an already wound winding wire is used as a stopper, winding is performed sequentially. By means of pitch-feeding the formers 24, 25, 26, and 27 in such a manner as to be retracted toward the shaft at winding pitches in accordance with a winding speed, coil end portions of the winding wire are deflected radially outward in a central region of each of the coil end surfaces. As is apparent from the above description, when turns of the winding wire are sequentially and orderly arranged from the outside toward the shaft, a stopper is required only for winding the first turn of the winding wire.

When winding by a required number of turns is completed, the rotor is rotated by 180 degrees. In a manner similar to and continuously from the preceding winding, winding is performed from a stopper toward the shaft such that turns of the winding wire on the core side surface extend vertically and are arranged closely and such that coil end portions of the winding wire are bent in such a manner as to deflect radially outward in a central region of each of the core end surfaces. When winding is completed, a winding end is tied to a commutator one-leg portion or to a hook of winding installation, thereby completing winding of a first segment. The number of turns of winding is determined in accordance with required motor specifications. In the case where a multilayer structure is employed, the above-mentioned winding operation is repeated as many as the number of layers, thereby completing the first segment. Notably, by means of employing an appropriate shape for the stoppers 20, 21, 22, and 23 (for example, a portion of each of the stoppers 20, 21, 22, and 23 projects on the core end surface), a portion of the winding wire on the core end surface (coil end portion) can have a straight-line portion (see FIG. 2(a)) in a radially outward region of the core end surface; i.e., in the vicinity of the circumference of the core end surface. Formation of the straight-line portion yields an effect of enhancing space factor for winding wound on the core.

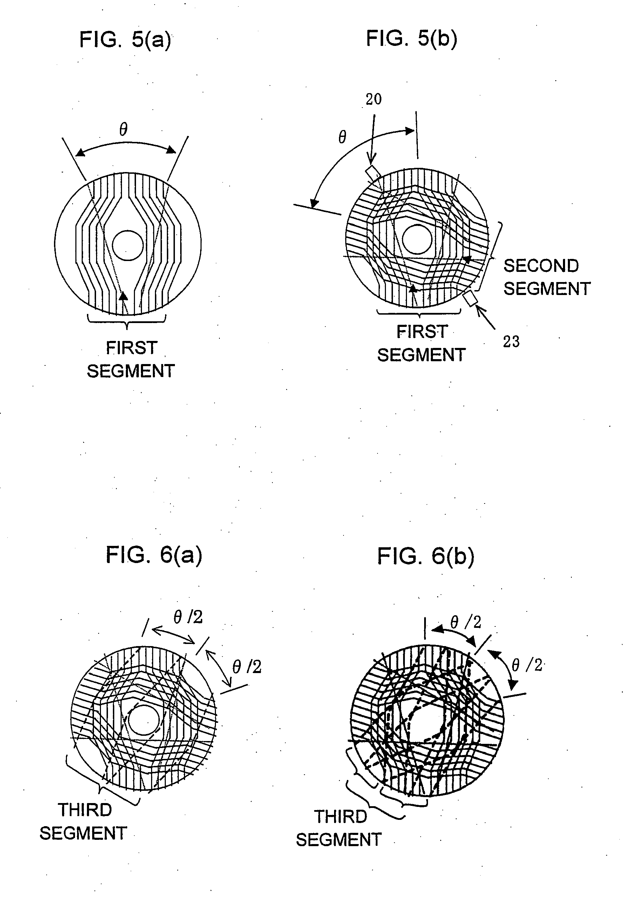

FIG. 5 is a view for describing winding of a second segment. FIG. 5(a) shows a state in which winding of the first segment is completed, and FIG. 5(b) shows a state in which winding of the second segment is wound on the first segment. As shown in FIG. 5(b), the second segment is formed at a position which is shifted by angle θ (in the case of five segments, θ = 360 degrees/5 = 72 degrees) from the position of the completed first segment, by means of performing winding in a manner similar to that of the first segment while an end portion of the first segment is taken as a starting end for winding of the second segment. In this case, an end portion of winding of the completed first segment serves as a stopper; however, if this involves difficulty in winding due to the diameter of the core, the diameter of wire, or the like, the stoppers 20, 23, and the like are provided.

Next, a third segment is wound in a similar procedure. Formation of the third segment requires a winding space of degree θ on the core side surface on each of opposite sides of the shaft. However, as shown in FIG. 6(a), only a winding space of θ/2, which is half the required angular space θ, is available on the core side surface on each of opposite sides of the shaft. Thus, half of the third segment is wound on the remaining θ/2 space, and another half of the third segment is wound on the completed first or second segment.
In the case of five segments, as described above, the third segment is wound in a split fashion. In the case of seven segments, a fourth segment is wound in a split fashion. Basically, in the case of an odd number of segments, the middle segment is wound in a split fashion.

According to the winding method shown in FIG. 6(a), as far as a single turn of the winding wire of the third segment is concerned, when the turn of the winding wire is wound in, for example, an open space located at the right side of the shaft on the core side surface, the turn of the winding wire is wound on existing winding at the left side of the shaft. In order to avoid such an asymmetric form of winding; i.e., in order to perform symmetric winding, the winding method shown in FIG. 6(b) is also possible. Specifically, half of the turns of one segment are wound in the open, angular space θ/2 in such a manner as to be divided on opposite sides of the shaft. The remaining half of the turns are wound continuously from the first half at a position shifted by 6/2 from the open, angular space θ/2, in such a manner as to overlie existing winding.

The remaining fourth and fifth segments are wound in a manner similar to that for the first and second segments except that they are wound on existing winding. Thus, winding is entirely completed. Then, winding turns are fixed together by means of adhesive. According to a method of fixing winding, a fusible-adhesive-coated wire is used for winding. Specifically, during the course of winding, heating is performed for fixing winding. Alternatively, after completion of a winding layer, the winding layer is pressed from radially outside of the rotor under application of heat by use of a forming jig, whereby the winding layer can be fixed in a predetermined shape. In this manner, by use of the fusible-adhesive-coated wire, winding performance can be improved. The fusible-adhesive-coated wire is a known wire configured such that winding wire formed by coating copper wire with insulation film is further coated with a cement layer formed of adhesive.

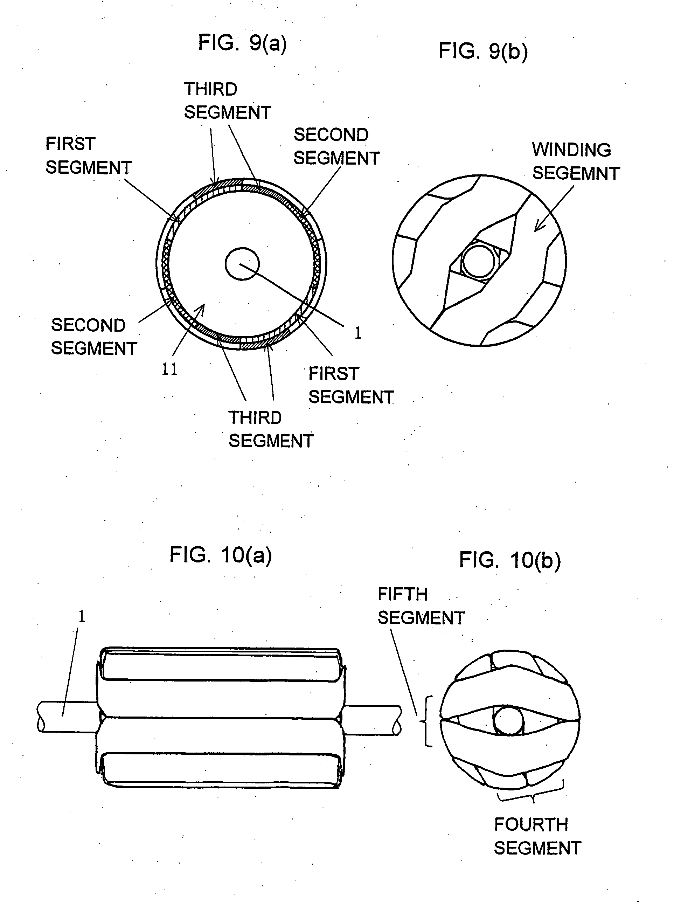

FIG. 9(a) is a sectional view showing a rotor whose winding is completed as described above, and FIG. 9(b) is an end view of the rotor. As mentioned previously, the third segment is divided into an upper layer and a lower layer. Illustration of the fourth and fifth segments is omitted.

FIG. 10 is a couple of views of the completed rotor as viewed in different directions. FIG. 10(a) is a front view of the rotor with a shaft oriented horizontally. FIG. 10(b) is an end view of the rotor. In the end view of FIG. 10(b), the last wound fifth segment appears at the top, and the fourth segment appears immediately below the fifth segment.
In the front view of the rotor of FIG. 10(a), the boundaries between the segments are illustrated. However, as mentioned previously, windings are orderly arranged such that, on the core side surface as viewed after completion of winding; i.e., on the outer surface of the rotor as viewed after completion of winding, a clearance or a difference in level is absent in the middle of each segment and between segments.

FIG. 11 is a sectional view showing an example of a small-sized motor which is completed by attaching a commutator to the rotor of FIG. 10 and fitting the resulting assembly into a motor casing. The field magnets 2 are attached to the inner circumferential surface of the casing 7 which is formed into a closed-bottomed tubular shape by use of a metal material. A casing cover 14 is fitted into an opening portion of the casing 7, thereby closing the casing 7. A bearing 15 for the shaft 1 is accommodated in a central portion of the casing cover 14. The other end of the shaft 1 is supported by a bearing 16 provided at the center of a bottom portion of the casing 7 having a closed-bottomed tubular shape. The core, windings which are wound on the core as described above, and a commutator 19 are provided on the shaft 1, thereby forming the rotor. Winding end portions (not shown) of the segments are connected to corresponding commutator pieces in an ordinary manner via corresponding commutator one-leg portions 18. Brushes 13 in contact with the commutator 19 are supported by the casing cover 14 in an ordinary manner. Input terminals 17 connected to the corresponding brushes 13 project through the casing cover 14 to the exterior of the motor.

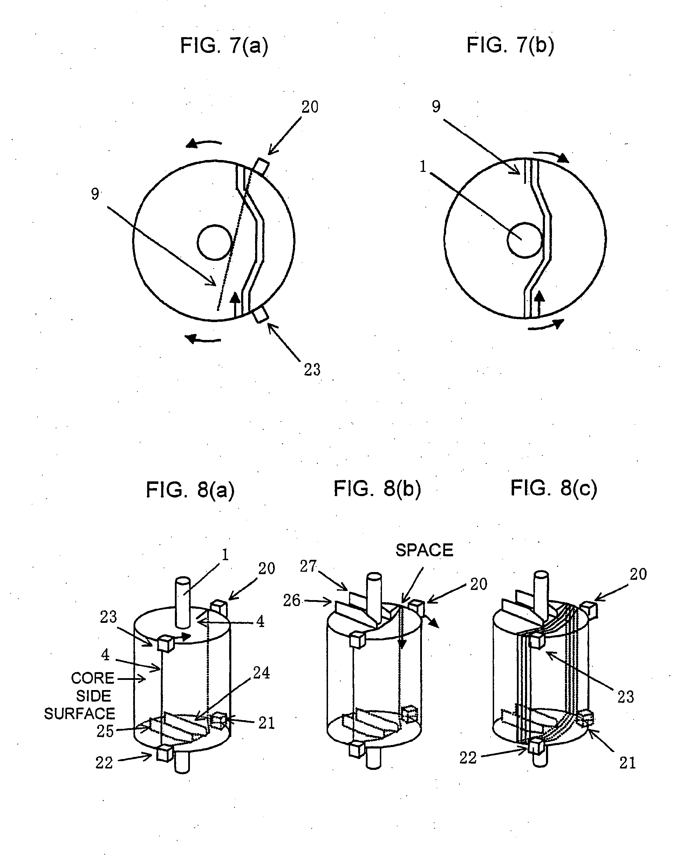

FIG. 7 is a view for describing another example of a winding structure. FIG. 7(a) is a view showing an example winding structure which is formed by the same method as that which has been described with reference to FIGS. 4, 5, and 6, and FIG. 7(b) is a view showing another example. According to the previously described winding method, in the case where winding proceeds from an outer-circumference side of the rotor toward an inner-circumference side of the rotor (in a direction approaching the shaft) as depicted by the arrows of FIG. 7(a), a lead wire 9 for leading a winding wire when the winding wire is to be initially caught on the stopper 20 underlies subsequently wound portion of winding. In order to avoid this, in another example shown in FIG. 7(b), first, winding proceeds from the inner-circumference side of the rotor toward the outer-circumference side of the rotor (in a direction going away from the shaft) as depicted by the arrows of FIG. 7(b); subsequently, winding proceeds from the outer-circumference side of the rotor toward inner-circumference side of the rotor in a direction opposite that depicted by the arrows in such a manner as to overlie the previously wound portion of winding. Also, by the similar winding procedure, winding is wound on the opposite side with respect to the shaft 1. By this procedure, the lead wire 9 at the winding start end and the lead wire 9 at the winding termination end do not underlie a portion of winding wound on the core end surface, whereby the height of a coil end portion can be further lowered.

FIG. 8 is a series of views for describing a method of forming the winding structure of FIG. 7(b). FIGS. 8(a) to 8(c) show steps of forming the winding structure. As shown in FIG. 8(a), first, the winding wire 4 is tied (not shown) to a commutator one-leg portion or to a hook of winding installation. Next, the winding wire 4 is led to and caught on the stopper 20 which is provided at an edge portion of the core end surface and can be pitch-fed. The stopper 20 is positioned for wiring at a position closest to the rotor center. Next, while being caught on the stopper 20, the winding wire 4 is led on the core side surface vertically downward in parallel with the shaft 1. Then, the winding wire 4 is caught on the stopper 21 which can be pitch-fed, and is led toward the stopper 22 which can be pitch-fed. At this time, the winding wire 4 is sequentially caught on the formers 24 and 25, thereby being bent in such a manner as to deflect radially outward in a central region of the core end surface. Next, the winding wire 4 is caught on the stopper 22. While being caught on the stopper 22, the winding wire 4 is led on the core side surface vertically upward in parallel with the shaft 1 and is then caught on the stopper 23 which can be pitch-fed.

Next, as shown in FIG. 8(b), during the winding wire being led toward the stopper 20, the winding wire is sequentially caught on the formers 26 and 27, thereby being bent in such a manner as to deflect radially outward in a central region of the core end surface. Next, the winding wire is caught on the stopper 20. When the winding wire is to be caught on the stopper 20, the stopper 20 is pitch-fed from the inner-circumference side of the rotor toward the outer-circumference side of the rotor as depicted by the arrow so as to form a space for allowing the winding wire to be received therein. For orderly winding, the operation of the stopper 20 is adjusted so as to allow the winding wire to be slipped into an open space formed by the pitch feed. In this manner, the winding wire is sequentially wound.

Next, when winding by a required number of turns is completed as shown in FIG. 8(c), the stoppers 20, 21, 22, and 23 are fixed. By the same winding method as that which has been described with reference to FIG. 4, winding is performed from the outer-circumference side of the rotor toward the inner-circumference side of the rotor in an overlying fashion. Then, similarly, winding is wound on the opposite side with respect to the shaft 1. Finally, a winding end is tied to a commutator one-leg portion or to a hook of winding installation, thereby completing winding of the first segment. The number of turns of winding is determined in accordance with motor specifications. Subsequently, as in the case of FIG. 5, in order to shift a winding position by angle θ for winding the second segment, the rotor is rotated by angle θ. Then, the second segment is wound. In this manner, winding is sequentially performed for a required number of segments to thereby be completed. This method allows winding to be performed such that a lead wire at the winding start end and a lead wire at the winding termination end do not underlie a coil end portion of winding.

In this case, the stoppers 20 and 23 which can be pitch-fed, and the stoppers 21 and 22 which can be pitch-fed are respectively positioned substantially in a diagonal relation with respect to the center of the circle of the core end surface.

## Claims

1. A slotless motor comprising a field magnet and a rotor, the rotor comprising a core fixed on a shaft, and windings, the core having a cylindrical side surface facing the field magnet, and opposite end surfaces located at opposite sides with respect to a direction of a shaft axis, the windings in a plurality of segments being wound on the side surface and on the end surfaces of the core, **characterized in that**
the winding of a plurality of turns of each of the segments is wound orderly in such a manner as to be symmetrical with respect to the shaft and such that the turns do not intersect with each other; and
the winding of each of the segments is such that, at least on the side surface of the core, symmetrically arranged opposite portions of the winding are orderly arranged in parallel with the shaft axis with no clearance formed therebetween and such that, on each of the opposite end surfaces of the core, the symmetrically arranged opposite portions of the winding are orderly arranged in such a manner as to deflect radially outward in a central region of the end surface so as to avoid the shaft.

2. A slotless motor according to claim 1, wherein each of the symmetrically arranged opposite portions of the winding of each of the segments is formed by one or more sets of winding, one set of winding consisting of orderly winding from a near side near the shaft toward a far side far from the shaft, and subsequent orderly winding from the far side toward the near side in such a manner as to overlie the previously wound portion of winding.

3. A method of manufacturing a slotless motor comprising a field magnet and a rotor, the rotor comprising a core fixed on a shaft, and windings, the core having a cylindrical side surface facing the field magnet, and opposite end surfaces located at opposite sides with respect to a direction of a shaft axis, the windings in a plurality of segments being wound on the side surface and on the end surfaces of the core,
**characterized in that**
in orderly winding the winding of a plurality of turns of each of the segments in such a manner as to be symmetrical with respect to the shaft and such that the turns do not intersect with each other,
the winding of each of the segments is formed such that, at least on the side surface of the core, by use of a positioning jig for appropriately positioning winding on the core, symmetrically arranged opposite portions of the winding are orderly arranged in parallel with the shaft axis with no clearance formed therebetween and such that, on each of the opposite end surfaces of the core, by use of a forming jig for forming winding into a predetermined shape and positioning the formed winding, the symmetrically arranged opposite portions of the winding are orderly arranged in such a manner as to deflect radially outward in a central region of the end surface so as to avoid the shaft; and
the positioning jig and the forming jig are controlled so as to move and stop synchronously with operation of a winding machine.

4. A method of manufacturing a slotless motor according to claim 3, wherein each of the symmetrically arranged opposite portions of the winding of each of the segments is formed by one or more sets of winding, one set of winding consisting of orderly winding from a near side near the shaft toward a far side far from the shaft, and subsequent orderly winding from the far side toward the near side in such a manner as to overlie the previously wound portion of winding.
